# EUROPEAN PATENT SPECIFICATION

(11) **EP 4 532 142 B1**
(45) Date of publication and mention of the grant of the patent: **13.05.2026**
(21) Application number: 23723667.4
(22) Date of filing: 24.04.2023
(51) Int. Cl.: B25B 27/04, F16H 7/08, F16H 7/24

(54) **DEVICE AND METHOD FOR REMOVING A LOCK-UP PIN OF A TENSIONER FOR A BELT DRIVE**
VORRICHTUNG UND VERFAHREN ZUM ENTFERNEN EINES SPERRBOLZENS VON EINEM SPANNER FÜR EINEN RIEMENTRIEB
DISPOSITIF ET PROCÉDÉ POUR RETIRER UNE BROCHE DE VERROUILLAGE D'UN TENDEUR POUR UN ENTRAÎNEMENT PAR COURROIE

(30) Priority: 01.06.2022 IT 202200011642
(43) Date of publication of application: 09.04.2025
(73) Proprietor: Muviq S.r.l., 10015 Ivrea (TO) (IT)
(72) Inventor: ROCA FUMAGALLI, Flavio Alejandro, 66100 CHIETI (IT); AQUILINO, Giuseppe, 66100 CHIETI (IT)
(74) Representative: Studio Torta S.p.A.
(86) International application number: PCT/IB2023/054183
(87) International publication number: WO 2023/233215

(56) References cited:
- US-A1- 2015 011 345
- US-A1- 2015 101 162

## Description

### Technical field

The present invention relates to a device and method for removing a lock-up pin of a tensioner for a belt drive. Such a device is known from US2015/101162A1.

### Background art

As is known, a tensioner for a belt of a transmission comprises a base, an arm hinged to the base, a pulley carried by the arm and rotatable with respect to it, and a spring exerting on the arm a torque configured to maintain the pulley in contact with the belt. Generally, the tensioner further comprises a lock-up pin configured to lock the arm with respect to the base in an installation position.

Conveniently, the tensioner is provided in the installation position, i.e. with the lock-up pin inserted so as to lock the arm with respect to the base. This facilitates the installation of the belt and of the tensioner, in particular the positioning and the fixing of the base, but makes it necessary to remove the lock-up pin so as to make the tensioner operational.

Since the lock-up pin is subject to cutting forces exerted by the spring on the arm, its removal is possible only in an equilibrium condition where such forces are manually balanced by an operator who acts with a key on a loading element integral with the arm. Such action is carried out with one hand only because the other hand is engaged in manually extracting the lock-up pin. The manual effort required is thus very high.

A purpose of the present invention is to provide a device which can overcome the above problems.

### Disclosure of the invention

The aforementioned purpose is achieved by a device as claimed in claim 1.

The present invention further relates to a method as claimed in claim 10.

### Brief description of the drawings

For a better understanding of the present invention, a preferred embodiment is described below, by way of nonlimiting example and with reference to the accompanying drawings, wherein:
- Figure 1 is a front view of a device according to the present invention;
- Figure 2 is a rear view of the device of Figure 1;
- Figure 3 is a side view of the device of Figure 1;
- Figure 4 is a cross-sectional view along line IV-IV of Figure 1;
- Figure 5 is a cross-sectional view along line V-V of Figure 3;
- Figure 6 is a partial cross-sectional view along line VI-VI of Figure 1 in enlarged scale;
- Figure 7 is a partial side view, on an opposite side of Figure 3, and in enlarged scale of the device of Figure 1 in a different operational position; and
- Figure 8 is a partial exploded view of the device of Figure 1.

### Detailed description of the invention

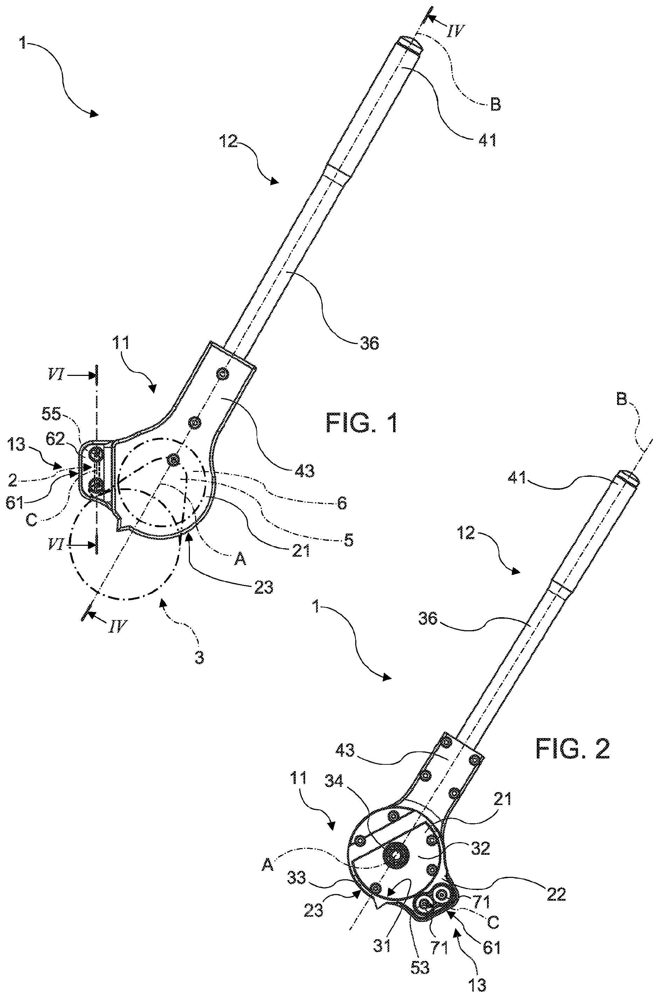

With reference to Figure 1, there is indicated by 1 a device for removing a lock-up pin 2 of a tensioner 3 according to the present invention.

In particular, the tensioner 3 is of known type and comprises a base 4, an arm 5 hinged to the base 4, and a pulley 6 carried by the arm 5 and rotatable with respect to it. The tensioner 3 further comprises a spring (not illustrated) exerting on the arm 5 a torque configured to cause a rotation of the arm 5 with respect to the base 4 in a direction such as to maintain, in use, the pulley 6 in contact with a belt (not illustrated) of a transmission, for example an accessory transmission of an internal combustion engine. The lock-up pin 2 is configured to lock the arm 5 with respect to the base 4 in an installation position, and must be removed so as to make the tensioner 3 operational and to enable the rotation of the arm 5 under the action of the spring.

The device 1 comprises a main body 11, a lever 12 rigidly coupled to the main body 11, and a sliding element 13 prismatically coupled to the main body 11.

The main body 11 comprises a coupling portion 21, substantially shaped as a cylinder of axis A, and a guiding portion 22 extending along a lateral outer surface 23 of the coupling portion 21 and configured to guide the sliding element 13.

The coupling portion 21 (Figure 2) of the main body 11 is configured to couple to the tensioner 3. In particular, the coupling portion 21 has a substantially cylindrical seat 31, defined by a substantially circular portion 32 of axis A and by a circumferential edge 33 extending axially from the lateral outer surface 23. The coupling portion 21 is provided with a key 34 of axis A, arranged in the portion 32, couplable to a loading element 35 integral with an arm 5 of the tensioner 3.

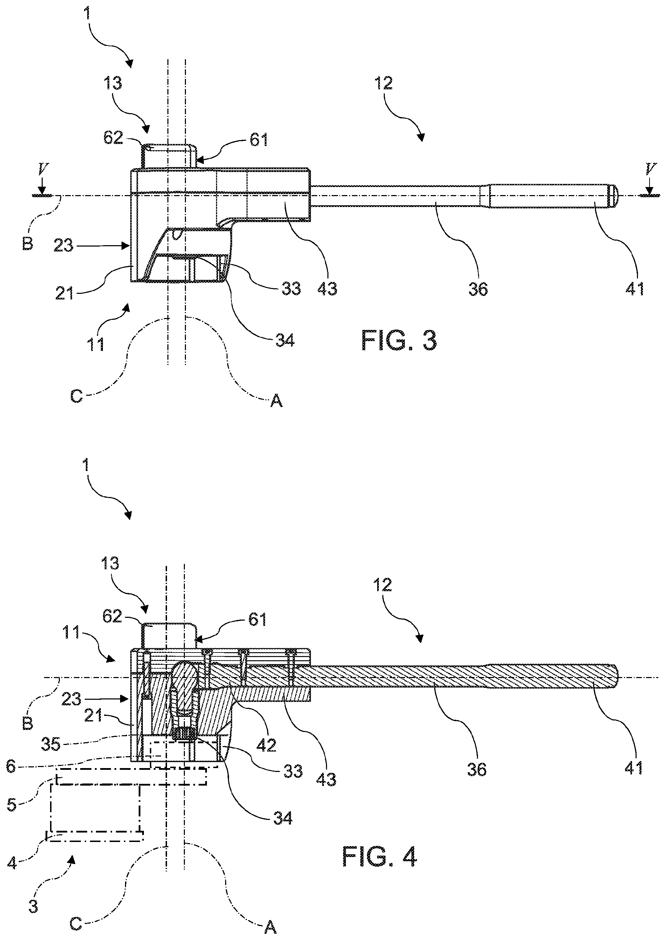

In particular, the loading element 35 (Figure 4) is a prismatic end of a pin of the pulley 6 of the tensioner 3. Therefore, the seat 31 is configured to at least partially accommodate the pulley 6, and the key 34, of "female" type, is configured to prismatically cooperate with the loading element 35. Conveniently, the key 34 is interchangeable and can be chosen based on the prismatic end of the pin so as to couple thereto.

The lever 12 comprises a rod 36 extending along an axis B, orthogonal to the axis A, and rigidly coupled to the coupling portion 21.

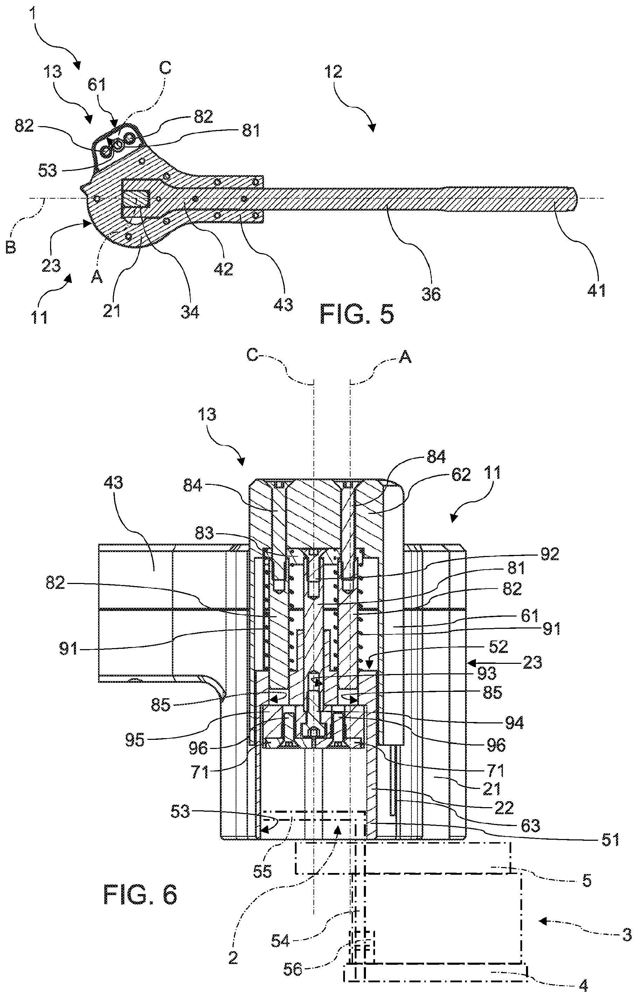

The rod 36 (Figures 4 and 5) comprises a first end 41 which is free and constitutes a handle of the device 1, and a second end 42 which is inserted inside the main body 11 and carries the key 34. Conveniently, the main body 11 has a connecting portion 43, substantially tubular, which extends along the axis B from the coupling portion 21 and envelops a section of the rod 36 close to the second end 42.

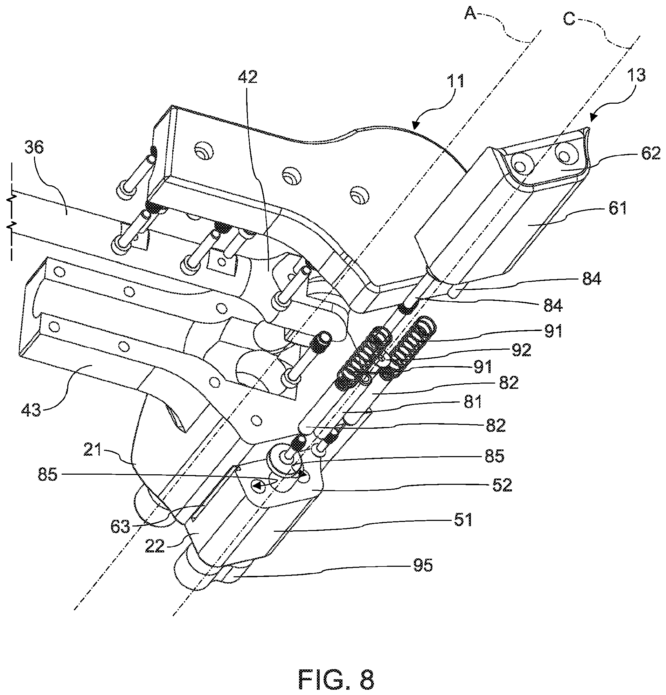

The guiding portion 22 of the main body 11 (Figure 8) is substantially shaped as a prism with a trapezoidal base, which extends along an axis C, parallel to the axis A, and is coupled to the coupling portion 21 along a lateral face of its own corresponding to the larger base of the trapezium. The guiding portion 22 (Figure 6) is hollow and has a lateral wall 51 and a base wall 52, orthogonal to the axis C, delimiting, as a whole, a cavity 53 which is open on the side of the edge 33 of the coupling portion 21 and configured to at least partially accommodate the lock-up pin 2.

In particular, the lock-up pin 2 is made of ferromagnetic material and is typically L-shaped, with a long section 54 defining an axis of the lock-up pin 2 and a short section 55 orthogonal thereto. The long section 54 is configured to lock the arm 5 with respect to the base 4 of the tensioner 3 in the installation position, engaging respective holes (not illustrated) obtained respectively in a radial appendix 56 of the arm 5 and in the base 4, and the short section 55 is arranged on the opposite side with respect to the base 4 of the tensioner 3.

The cavity 53 of the guiding portion 22 is sized to allow the entry of the lock-up pin 2 along its own axis, arranged parallel to the axis C, so that the short section 55 is completely accommodated in the cavity 53 and the long section 54 is at least partially accommodated in the cavity 53.

The sliding element 13 is shaped to at least partially envelop the guiding portion 22. In particular, the sliding element 13 is substantially a prism with a trapezoidal base, shaped similarly to the guiding portion 22 and having a cavity sized to accommodate the guiding portion 22. In particular, the sliding element 13 comprises a lateral wall 61, shaped to envelop and slide along the lateral wall 51 of the guiding portion 22, and a base portion 62 arranged on the opposite side with respect to the edge 33 and extending from the lateral wall 61 towards the coupling portion 21.

Preferably, the axial length of the lateral wall 61 is substantially equal to the axial length of the coupling portion 21.

The lateral wall 61 of the sliding element 13 has, along its own lateral edges adjacent to the main body 11, respective axial projections slidable in respective grooves 63 present on the guiding portion 22. Therefore, the sliding element 13 behaves like a slide sliding on the guiding portion 22.

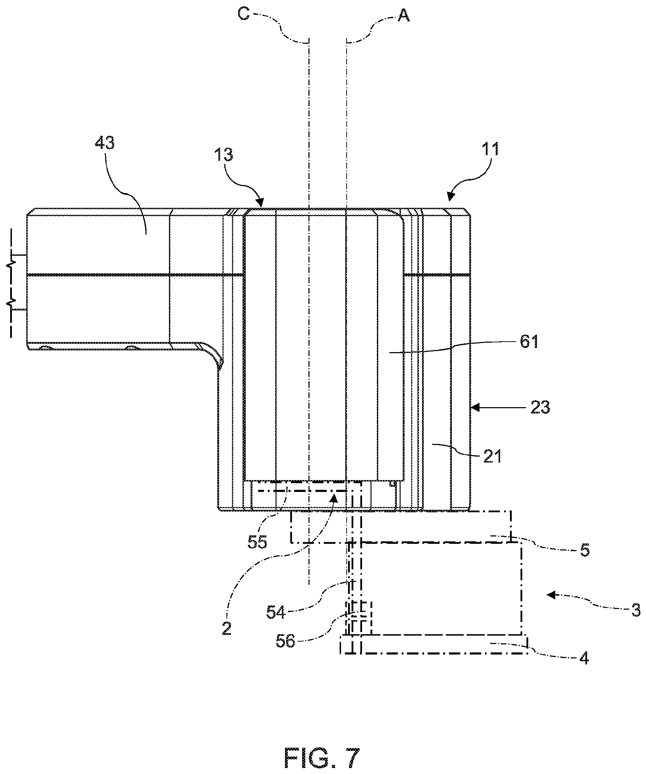

The sliding element 13 is movable between a rearward rest position (Figures 3, 4 and 6) and a forward position of coupling (Figure 7) wherein it interacts with the lock-up pin 2.

The device 1 (Figure 6) further comprises two magnets 71 carried by the sliding element 13 and configured to interact with the lock-up pin 2 of the tensioner 3.

In particular, the sliding element 13 internally comprises a cylindrical central element 81 of axis C and two cylindrical lateral elements 82 having axes parallel to the axis C, equidistant from it and arranged along a plane which contains it.

The cylindrical lateral elements 82 have respective first ends accommodated in a plate 83 arranged in contact with the base portion 62 and are fixed to the latter via screws 84 passing through the base portion 62 and the plate 83. Second ends of the cylindrical lateral elements 82 are accommodated in a sliding manner in respective holes 85 of the base wall 52 of the guiding portion 22. Between the plate 83 and the base wall 52 of the guiding portion 22 respective compression springs 91 are mounted pre-compressed, coaxial to the cylindrical lateral elements 82. Therefore, the springs 91 exert on the sliding element 13 an elastic force configured to return the sliding element 13 from the forward position to the rest position.

The cylindrical central element 81 has a first end fixed to the plate 83 via a screw 92, has a greater length with respect to the cylindrical lateral elements 82 and is axially slidable through a through-hole 93 of axis C of the guiding portion 22. A second end of the cylindrical central element 81 is fixed, via a screw 94, to a supporting block 95 accommodated in a sliding manner in the cavity 53 of the guiding portion 22. The supporting block 95 carries the magnets 71, fixed thereto via screws 96 and arranged on opposite sides with respect to the axis C so as to magnetically interact with the short section 55 of the lock-up pin 2.

In use, the device 1 allows removing the lock-up pin 2 of the tensioner 3.

In particular, the method for removing the lock-up pin 2 of the tensioner 3 via the device 1 comprises several steps, described in detail hereinafter starting from a configuration where the tensioner 3 is in the installation position, the lock-up pin 2 locks the arm 5 with respect to the base 4, and the belt is installed.

Initially, the device 1 is coupled to the tensioner 3 so that the key 34 engages the loading element 35.

In particular, the key 34 is prismatically coupled to the prismatic end of the pin of the pulley 6 of the tensioner 3 so that the axis A coincides with the axis of the pin. Therefore, the seat 31 of the coupling portion 21 at least partially accommodates the pulley 6 of the tensioner 3, and the cavity 53 of the guiding portion 22 at least partially accommodates the lock-up pin 2, and in particular the short section 55 thereof.

Subsequently, the sliding element 13 is displaced from the rearward rest position to the forward position of coupling with the lock-up pin 2, against the action of the springs 91, so as to magnetically couple the magnets 71 to the lock-up pin 2.

Since the sliding element 13 is movable with respect to the main body 11 along the axis C, parallel to the axis of the lock-up pin 2 when the key 34 is coupled to the loading element 35, the magnets 71 carried by the sliding element 13 contact the short section 55 of the lock-up pin 2.

When the sliding element 13 is in the forward position of coupling, the springs 91 exert restoring forces which tend to return it in the rearward rest position, thus removing the lock-up pin 2 from the tensioner 3. However, the long section 54 of the lock-up pin 2 is subject to cutting forces caused by the spring of the tensioner 3, which exerts on the arm 5 a torque configured to cause a rotation of the arm 5 with respect to the base 4 in a first direction of rotation. Therefore, the lock-up pin 2 still remains in the tensioner 3 and the sliding element 13 still remains in the forward position of coupling.

Subsequently, on the lever 12 a torque is exerted opposite to the first direction of rotation so as to balance the torque exerted by the spring of the tensioner 3 on the arm 5 and thus annul the cutting forces which act on the long section 54 of the lock-up pin 2, thus releasing the lock-up pin 2. Therefore, the lock-up pin 2 is automatically removed from the base 4, and possibly also from the arm 5, since the sliding element 13 returns in the rearward rest position under the restoring action of the springs 91.

Subsequently, it is possible to guide the rotation of the device 1 under the action of the spring of the tensioner 3 to a position where the pulley 6 cooperates with the belt and the force exerted by the contact between the belt and the pulley 6 balances the torque exerted by the spring of the tensioner 3 on the arm 5.

At this point, it is possible to remove the device 1 from the tensioner 3, by decoupling the key 34 from the loading element 35, since the resultant of the cutting forces on the loading element 35 of the tensioner 3 is null. Therefore, the key 34 can be easily decoupled from the loading element 35. The lock-up pin 2 remains magnetically coupled to the device 1 thanks to the magnetic interaction between the lock-up pin 2 and the magnets 71.

Finally, it is possible to manually extract the lock-up pin 2 from the device 1, decoupling it from the magnets 71.

Upon examination of the characteristics of the device 1, the advantages of the present invention are evident.

In particular, the device 1 allows removing the lock-up pin 2 in a simple and quick manner, exerting a reduced manual effort. Indeed, since the extraction of the pin is carried out automatically by the springs 91, the operator has both hands free for exerting on the lever 12 a torque which is sufficient for balancing the torque of the spring of the tensioner 3.

Since the key 34 is interchangeable, it is possible to use the device 1 on different tensioners simply by choosing a key 34 corresponding to the loading element 35 of the tensioner 3.

Finally, it is clear that modifications and variations can be made to the device 1 without going beyond the scope of protection defined by the claims.

For example, the structure of the main body 11, the lever 12 and the sliding element 13 can be different from that described.

The key 34 can be of "male" type instead of "female" type, if the loading element 35 of the tensioner 3 is a key of "female" type.

## Claims

1. Device for removing a lock-up pin (2) of a tensioner (3), comprising a main body (11) provided with a key (34) couplable to a loading element (35) integral with an arm (5) of the tensioner (3), a lever (12) rigidly coupled to the main body (11), a sliding element (13) prismatically coupled to the main body (11) and movable with respect to it along a first axis (C) parallel to an axis of the lock-up pin (2) when the key (34) is coupled to the loading element (35), at least one magnet (71) carried by the sliding element (13) and configured to interact with the lock-up pin (2) of the tensioner (3), the sliding element (13) being movable between a rearward rest position and a forward position of coupling with the lock-up pin (2), and elastic means (91) exerting on the sliding element (13) an elastic force parallel to said direction of relative motion between the main body (11) and the sliding element (13) to return the sliding element (13) from the forward position to the rest position.

2. Device as claimed in claim 1, wherein the main body (11) comprises a coupling portion (21) provided with said key (34) and a guiding portion (22) configured to guide the sliding element (13).

3. Device as claimed in claim 2, wherein the coupling portion (21) has a seat (31) configured to at least partially accommodate a pulley (6) of the tensioner (3), said key (34) being housed in the seat (31) and configured to cooperate with a prismatic end of a pin of the pulley (6) defining the loading element (35).

4. Device as claimed in claim 2 or 3, wherein the guiding portion (22) has a cavity (53) configured to at least partially accommodate the lock-up pin (2).

5. Device as claimed in any of claims 2 to 4, wherein the guiding portion (22) extends along an outer surface (23) of the coupling portion (21) and the sliding element (13) is shaped to at least partially envelop the guiding portion (22).

6. Device as claimed in any of the preceding claims, wherein the lever (12) comprises a rod (36) orthogonal to the first axis (C).

7. Device as claimed in any of claims 2 to 6, wherein the elastic means (91) are operatively interposed between the guiding portion (22) and the sliding element (13).

8. Device as claimed in claim 7, wherein the elastic means (91) comprise at least one compression spring (91) having an axis parallel to the first axis (C) and wherein the at least one compression spring (91) has a maximum extension in the forward position of the sliding element (13) and a minimum extension in the rearward position of the sliding element (13).

9. Device as claimed in any of the preceding claims, wherein the key (34) is interchangeable.

10. Method for removing a lock-up pin (2) of a tensioner (3) via a device (1) as claimed in any of the preceding claims, the tensioner (3) comprising a base (4), an arm (5) hinged to the base (4), a spring exerting on the arm (5) a torque configured to cause a rotation of the arm (5) with respect to the base (4) in a first direction of rotation, a lock-up pin (2) configured to lock the arm (5) with respect to the base (4) in an installation position, a pulley (6) carried by the arm (5) and rotatable with respect to it about a second axis, and a loading element (35) integral with an arm (5) of the tensioner (3), the pulley (6) being configured to cooperate with a belt of a transmission, the method comprising the steps of:
- coupling the device (1) to the tensioner (3) so that the key (34) engages the loading element (35);
- displacing the sliding element (13) from the rearward rest position to the forward position of coupling with the lock-up pin (2), against the action of the elastic means (91), to magnetically couple the at least one magnet (71) to the lock-up pin (2); and
- exerting on the lever (12) a torque opposite to the first direction of rotation so as to balance the torque exerted by the spring of the tensioner (3) on the arm (5), thus releasing the lock-up pin (2) at least from the base (4) via the displacement of the sliding element (13) from the forward position of coupling to the rearward rest position via the elastic means (91).

11. Method as claimed in claim 10, comprising the further steps of:
- guiding the rotation of the device (1) under the action of the spring of the tensioner (3) to a position where the pulley (6) cooperates with the belt and the force exerted by the contact between the belt and the pulley (6) balances the torque exerted by the spring of the tensioner (3) on the arm (5);
- removing the device (1) from the tensioner (3) by decoupling the key (34) from the loading element (35); and
- removing the lock-up pin (2) from the device (1).

## Patentansprüche

1. Vorrichtung zum Entfernen eines Sperrbolzens (2) eines Spanners (3), umfassend einen Hauptkörper (11), der mit einem Mitnehmer (34) versehen ist, der mit einem Belastungselement (35) koppelbar ist, das einstückig mit einem Arm (5) des Spanners (3) ist, einen starr mit dem Hauptkörper (11) gekoppelten Hebel (12), ein Gleitelement (13), das prismatisch mit dem Hauptkörper (11) gekoppelt und in Bezug auf diesen entlang einer ersten Achse (C) parallel zu einer Achse des Sperrbolzens (2) beweglich ist, wenn der Mitnehmer (34) mit dem Belastungselement (35) gekoppelt ist, mindestens einen Magneten (71), der von dem Gleitelement (13) getragen wird und so konfiguriert ist, dass er mit dem Sperrbolzen (2) des Spanners (3) zusammenwirkt, wobei das Gleitelement (13) zwischen einer rückwärtigen Ruheposition und einer vorderen Position der Kopplung mit dem Sperrbolzen (2) beweglich ist, und elastische Mittel (91), die auf das Gleitelement (13) eine elastische Kraft parallel zu der Richtung der relativen Bewegung zwischen dem Hauptkörper (11) und dem Gleitelement (13) ausüben, um das Gleitelement (13) von der vorderen Position in die Ruheposition zurückzuführen.

2. Vorrichtung nach Anspruch 1, wobei der Hauptkörper (11) einen Kupplungsabschnitt (21), der mit dem Mitnehmer (34) versehen ist, und einen Führungsabschnitt (22) umfasst, der so gestaltet ist, dass er das Gleitelement (13) führt.

3. Vorrichtung nach Anspruch 2, wobei der Kupplungsabschnitt (21) einen Sitz (31) aufweist, der so konfiguriert ist, dass er zumindest teilweise eine Riemenscheibe (6) des Spanners (3) aufnimmt, wobei der Mitnehmer (34) in dem Sitz (31) untergebracht und so konfiguriert ist, dass er mit einem prismatischen Ende eines Stifts der Riemenscheibe (6) zusammenwirkt, der das Belastungselement (35) definiert.

4. Vorrichtung nach Anspruch 2 oder 3, wobei der Führungsabschnitt (22) einen Hohlraum (53) aufweist, der so gestaltet ist, dass er zumindest teilweise den Sperrbolzen (2) aufnimmt.

5. Vorrichtung nach einem der Ansprüche 2 bis 4, wobei sich der Führungsabschnitt (22) entlang einer Außenfläche (23) des Kupplungsabschnitts (21) erstreckt und das Gleitelement (13) so geformt ist, dass es den Führungsabschnitt (22) zumindest teilweise umschließt.

6. Vorrichtung nach einem der vorhergehenden Ansprüche, wobei der Hebel (12) eine zur ersten Achse (C) orthogonale Stange (36) aufweist.

7. Vorrichtung nach einem der Ansprüche 2 bis 6, wobei die elastischen Mittel (91) zwischen dem Führungsabschnitt (22) und dem Gleitelement (13) angeordnet sind.

8. Vorrichtung nach Anspruch 7, wobei die elastischen Mittel (91) mindestens eine Druckfeder (91) mit einer Achse parallel zur ersten Achse (C) umfassen und wobei die mindestens eine Druckfeder (91) eine maximale Ausdehnung in der vorderen Position des Gleitelements (13) und eine minimale Ausdehnung in der hinteren Position des Gleitelements (13) aufweist.

9. Vorrichtung nach einem der vorhergehenden Ansprüche, wobei der Mitnehmer (34) austauschbar ist.

10. Verfahren zum Entfernen eines Sperrbolzens (2) eines Spanners (3) über eine Vorrichtung (1) nach einem der vorhergehenden Ansprüche, wobei der Spanner (3) umfasst: eine Basis (4), einen an der Basis (4) angelenkten Arm (5), eine Feder, die auf den Arm (5) ein Drehmoment ausübt, das so gestaltet ist, dass es eine Drehung des Arms (5) in Bezug auf die Basis (4) in einer ersten Drehrichtung bewirkt, und eine Feder, die auf den Arm (5) ein Drehmoment ausübt, das so konfiguriert ist, dass es eine Drehung des Arms (5) in Bezug auf die Basis (4) in einer ersten Drehrichtung bewirkt, einen Sperrbolzen (2), der so konfiguriert ist, dass er den Arm (5) in Bezug auf die Basis (4) in einer Installationsposition arretiert, eine Riemenscheibe (6), die von dem Arm (5) getragen wird und in Bezug auf diesen um eine zweite Achse drehbar ist, und ein Belastungselement (35), das mit einem Arm (5) des Spanners (3) einstückig ist, wobei die Riemenscheibe (6) so konfiguriert ist, dass sie mit einem Riemen eines Getriebes zusammenwirkt, wobei das Verfahren die folgenden Schritte umfasst:
- Koppeln der Vorrichtung (1) mit dem Spanner (3), so dass der Mitnehmer (34) in das Belastungselement (35) eingreift;
- Verschieben des Gleitelements (13) aus der hinteren Ruheposition in die vordere Position der Kopplung mit dem Sperrbolzen (2) gegen die Wirkung der elastischen Mittel (91), um den mindestens einen Magneten (71) magnetisch mit dem Sperrbolzen (2) zu koppeln; und
- Ausüben eines Drehmoments auf den Hebel (12), das der ersten Drehrichtung entgegengesetzt ist, um das von der Feder des Spanners (3) auf den Arm (5) ausgeübte Drehmoment auszugleichen und so den Sperrbolzen (2) zumindest von der Basis (4) durch die Verschiebung des Gleitelements (13) aus der vorderen Kupplungsstellung in die hintere Ruhestellung über das elastische Mittel (91) freizugeben.

11. Verfahren nach Anspruch 10, umfassend die weiteren Schritte:
- Führen der Drehung der Vorrichtung (1) unter der Wirkung der Feder des Spanners (3) in eine Position, in der die Riemenscheibe (6) mit dem Riemen zusammenwirkt und die durch den Kontakt zwischen dem Riemen und der Riemenscheibe (6) ausgeübte Kraft das von der Feder des Spanners (3) auf den Arm (5) ausgeübte Drehmoment ausgleicht;
- Abnehmen der Vorrichtung (1) von dem Spanner (3) durch Entkoppeln des Mitnehmers (34) vom Belastungselement (35); und
- Entfernen des Sperrbolzens (2) von der Vorrichtung (1).

## Revendications

1. Dispositif de dépose d'une goupille de blocage (2) d'un tendeur (3), comprenant un corps principal (11) pourvu d'une clavette (34) pouvant être couplée à un élément de chargement (35) solidaire d'un bras (5) du tendeur (3), un levier (12) couplé rigidement au corps principal (11), un élément coulissant (13) couplé prismatiquement au corps principal (11) et mobile par rapport à celui-ci selon un premier axe (C) parallèle à un axe de la goupille de blocage (2) lorsque la clavette (34) est couplée à l'élément de chargement (35), au moins un aimant (71) porté par l'élément coulissant (13) et configuré pour interagir avec la goupille de verrouillage (2) du tendeur (3), l'élément coulissant (13) étant mobile entre une position arrière de repos et une position avant de couplage avec la goupille de verrouillage (2), et des moyens élastiques (91) exerçant, sur l'élément coulissant (13), une force élastique parallèle à ladite direction de mouvement relatif entre le corps principal (11) et l'élément coulissant (13) pour ramener l'élément coulissant (13) de la position avant à la position de repos.

2. Dispositif selon la revendication 1, dans lequel le corps principal (11) comprend une partie de couplage (21) pourvue de ladite clavette (34) et une partie de guidage (22) configurée pour guider l'élément coulissant (13).

3. Dispositif selon la revendication 2, dans lequel la partie de couplage (21) présente un siège (31) configuré pour accueillir au moins partiellement une poulie (6) du tendeur (3), ladite clavette (34) étant logée dans le siège (31) et configurée pour coopérer avec une extrémité prismatique d'une goupille de la poulie (6) définissant l'élément de chargement (35).

4. Dispositif selon la revendication 2 ou 3, dans lequel la partie de guidage (22) présente une cavité (53) configurée pour accueillir au moins partiellement la goupille de verrouillage (2).

5. Dispositif selon l'une quelconque des revendications 2 à 4, dans lequel la partie de guidage (22) s'étend le long d'une surface externe (23) de la partie de couplage (21) et l'élément coulissant (13) est formé pour envelopper au moins partiellement la partie de guidage (22).

6. Dispositif selon l'une quelconque des revendications précédentes, dans lequel le levier (12) comprend une tige (36) orthogonale au premier axe (C).

7. Dispositif selon l'une quelconque des revendications 2 à 6, dans lequel les moyens élastiques (91) sont interposés de manière opérationnelle entre la partie de guidage (22) et l'élément coulissant (13).

8. Dispositif selon la revendication 7, dans lequel les moyens élastiques (91) comprennent au moins un ressort de compression (91) présentant un axe parallèle au premier axe (C) et dans lequel l'au moins un ressort de compression (91) présente une extension maximale dans la position avant de l'élément coulissant (13) et une extension minimale dans la position arrière de l'élément coulissant (13).

9. Dispositif selon l'une quelconque des revendications précédentes, dans lequel la clavette (34) est interchangeable.

10. Procédé de retrait d'une goupille de blocage (2) d'un tendeur (3) via un dispositif (1) selon l'une quelconque des revendications précédentes, le tendeur (3) comprenant une base (4), un bras (5) articulé sur la base (4), un ressort exerçant, sur le bras (5), un couple configuré pour provoquer une rotation du bras (5) par rapport à la base (4) dans un premier sens de rotation, une goupille de blocage (2) configurée pour verrouiller le bras (5) par rapport à la base (4) dans une position de montage, une poulie (6) portée par le bras (5) et pouvant tourner par rapport à celui-ci autour d'un second axe, et un élément de chargement (35) solidaire d'un bras (5) du tendeur (3), la poulie (6) étant configurée pour coopérer avec une courroie d'une transmission, le procédé comprenant les étapes suivantes :
- le couplage du dispositif (1) au tendeur (3) de sorte que la clavette (34) se mette en prise avec l'élément de chargement (35) ;
- le déplacement de l'élément coulissant (13) de la position arrière de repos à la position avant de couplage avec la goupille de blocage (2), contre l'action des moyens élastiques (91), pour coupler magnétiquement l'au moins un aimant (71) à la goupille de blocage (2) ; et
- l'application, sur le levier (12), d'un couple opposé au premier sens de rotation de manière à équilibrer le couple exercé par le ressort du tendeur (3) sur le bras (5), libérant ainsi la goupille de blocage (2) au moins de la base (4) via le déplacement de l'élément coulissant (13) de la position avant de couplage à la position arrière de repos via les moyens élastiques (91).

11. Procédé selon la revendication 10, comprenant les étapes supplémentaires suivantes :
- le guidage de la rotation du dispositif (1) sous l'action du ressort du tendeur (3) vers une position où la poulie (6) coopère avec la courroie et la force exercée par le contact entre la courroie et la poulie (6) équilibre le couple exercé par le ressort du tendeur (3) sur le bras (5) ;
- le retrait du dispositif (1) du tendeur (3) en découplant la clavette (34) de l'élément de chargement (35) ; et
- le retrait de la goupille de blocage (2) du dispositif (1).
